# EUROPEAN PATENT SPECIFICATION

(11) **EP 1 357 743 B1**
(45) Date of publication and mention of the grant of the patent: **26.01.2005**
(21) Application number: 03252658.4
(22) Date of filing: 25.04.2003
(51) Int. Cl.: H04N 5/272

(54) **Shooting system and lighting apparatus for prompting a cast in a TV or cinema studio**
Aufnahme- und Beleuchtungssystem für die Projektion von Anweisungen an einen Darsteller in einem TV- oder Kinostudio
Système d'enregistrement et d'illumination pour guider un acteur dans un studio de télévision ou cinéma

(30) Priority: 26.04.2002 JP 2002126976
(43) Date of publication of application: 29.10.2003
(73) Proprietor: NIPPON HOSO KYOKAI, Tokyo 150-8001 (JP)
(72) Inventor: Fukaya, Takashi, c/o NHK Science & Techn.Res.Labs, Tokyo 157-8510 (JP); Fujikaka, Hideo, c/o NHK Science & Techn.Res.Labs, Tokyo 157-8510 (JP); Inoue, Seiki, c/o NHK Broadcasting Center, Tokyo 150-8001 (JP); Yagi, Nobuyuki, c/o NHK Science & Techn.Res.Labs, Tokyo 157-8510 (JP); Yamanouchi, Yuko, c/o NHK Science & Techn.Res.Labs, Tokyo 157-8510 (JP); Mitsumine, Hideki, c/o NHK Schience&Techn.Res.Labs, Tokyo 157-8510 (JP)
(74) Representative: Rees, Alexander Ellison

(56) References cited:
- WO-A-97/28654
- GB-A- 2 323 733
- US-A- 2 920 134
- US-A- 4 721 363
- US-A- 5 455 083
- PATENT ABSTRACTS OF JAPAN vol. 2000, no. 25, 12 April 2001 (2001-04-12) & JP 2001 209035 A (PANAFOTONIKKU:KK), 3 August 2001 (2001-08-03)

## Description

### BACKGROUND OF THE INVENTION

### 1. Field of the Invention

The present invention generally relates to shooting systems, and particularly relates to a shooting system provided with a shooting aid device that presents information to casts at the time of shooting a TV program or a film.

### 2. Description of the Related Art

On the set for shooting such as a television studio, markers such as pieces of sticky tapes may be placed at various locations. These markers allow the cast to know the position and size of a virtual object (e.g., a computer graphics object that can be seen by viewers, but is not actually in existence on the set) or let them know the position where they should stand.

When there is a need to inform the cast of director's instructions or how much time is left, TV crews may present to the cast a message board or the like on which a message is written. Alternatively, a prompter comprised of a half mirror placed in front of a TV camera lens is used to present a message to the cast.

Placing markers such as sticky tapes has a problem in that these markers may be seen by the viewers. Further, markers cannot be readily moved once they are placed, making it difficult for the cast to know the position of a virtual object that is moving. When a plurality of markers are used, the cast may confuse one marker with another, resulting in the failure to correctly identify the position.

When letters are used for presenting a message, the eye movement of the cast may be conspicuous when they look at the message board or the like. In the case of a prompter, there is no problem if the cast is supposed to look in the direction of the camera in that particular situation. If the cast is looking the other way, however, an act of looking at the camera may appear to be strange.

In order to obviate these problems, use of projection light for the purpose of presenting information is desired. For example, there is a location pointing system for motion picture cameras that utilizes a intermittent time period during which the camera is not exposing a film. This location pointing system emits a laser light beam so that a projected beam point serves as a marker point, thereby indicating the position of a virtual object.

Upon careful analysis of the related art technologies as described above, the applicants have found the following problems.

With the location pointing system that emits an intermittent laser beam by utilizing unexposed time periods of a film camera, the projected beam that serves as an indication of a marker position is only a small-size spot. When indicating a position within a narrow area such as the top of a desk, it is not a problem. When it is used for a wider area such as on the floor of a TV studio, however, a small-size spot cannot easily be found, thus failing as a marker. It is possible to scan the laser beam at high speed to draw letters for the purpose of presenting a message. Since the laser is intermittent, however, the letters end up having missing portions that are not drawn. This makes it difficult for the cast to read.

Accordingly, it is desirable to generate illumination light or display light that can easily be recognized by the cast, and that cannot be captured by a TV camera.

### SUMMARY OF THE INVENTION

It is a general object of the present invention to provide a shooting scheme that substantially obviates one or more problems caused by the limitations and disadvantages of the related art.

It is another and more specific object of the invention to provide a shooting scheme that generates irradiating light that cannot be captured by a TV camera.

It is yet another object of the invention to provide a shooting scheme that allows the positions of the markers to be freely moved during the shooting, and that allows information to be presented only when it is necessary.

Features and advantages of the present invention will be presented in the description which follows, and in part will become apparent from the description and the accompanying drawings, or may be learned by practice of the invention according to the teachings provided in the description. Objects as well as other features and advantages of the present invention will be realized and attained by a shooting scheme particularly pointed out in the specification in such full, clear, concise, and exact terms as to enable a person having ordinary skill in the art to practice the invention.

To achieve these and other advantages in accordance with the purpose of the invention, the invention provides an apparatus for shining light on an object during periods excluding the intermittent exposure periods of a camera taking shot of said object, comprising a light source which emits light; a liquid-crystal shotter driver adapted to receive a synchronizing signal of a television standard; a liquid-crystal shutter adapted to switch between transmitting of the light and blocking of the light in synchronization with the synchronizing signal such that the light is intermittently shone on the object.

Further, a system for shooting an object according to the present invention includes a camera which intermittently takes a shot of the object during intermittent periods in synchronization with the synchronizing signal.

In the system described above, a shutter mechanism associated with a ccd-type television camera may be used so as to create an unexposed period (i.e., a period during which no picture is taken) that is longer than in the case where no shutter mechanism is used. In synchronisation with the synchronising signal that is supplied from the camera or some other source, the shutter unit is switched between the transmitting of light and the blocking of light, so that the shutter unit is placed in the transparent state only during the unexposed period of the television camera. This achieves the generation of intermittent light that is not captured by the television camera.

Further, a liquid-crystal shutter used as the shutter unit is controlled to be at a predetermined temperature by using a temperature control unit. This makes it possible to operate the liquid-crystal shutter at a sufficient speed in synchronization with the synchronizing signal.

In the shooting system as described, a message can be presented by intermittent projection light that is not captured by the television camera, which makes it possible to present a message in the direction in which the cast is currently looking.

Some of the advantages that can be achieved by the invention includes the following.

Projection light of a projector is made intermittent by the shutter unit that opens only during the unexposed periods of the television camera, so that the projection light cannot captured by the television camera.

The cast is shown the position and size of a virtual object by use of intermittent light that cannot be captured by the television camera.

A message can be presented in the direction in which the cast is supposed to look in a particular situation by use of intermittent light that cannot be captured by the television camera.

The position of a projected message can be freely changed during the shooting of a television program, or the projected message can only be shown when it is necessary, by use of intermittent light that cannot be captured by the television camera.

When a virtual object is to be used, the shutter unit may be kept open, letting the television camera capture the projected light. This makes it possible to check displacements between a virtual object synthesized in the video signal and a virtual object that is actually presented in the studio. Correction of positions can thus be made if necessary.

Illumination can be provided even in such a situation as shooting is supposed to take place in the darkness or semidarkness.

Assistance can be provided for better stage presentation, or can be provided to the cast, which makes it possible to bring out better performance with enhanced staging effects.

Other objects and further features of the present invention will be apparent from the following detailed description when read in conjunction with the accompanying drawings.

### BRIEF DESCRIPTION OF THE DRAWINGS

Fig.1 is a block diagram showing a configuration of a shooting system according to a first embodiment of the invention;
Fig.2 is a timing chart for explaining the generation of intermittent light according to the first embodiment;
Figs.3A and 3B are illustrative drawings for explaining the directions of liquid-crystal molecules in the liquid-crystal shutter of the first embodiment;
Fig.4 is a chart showing the relationship between transparency and a drive voltage that is applied to the liquid-crystal shutter of the first embodiment;
Fig.5 is a chart showing the relationship between the temperature of liquid crystal and the response speed of the liquid-crystal shutter of the first embodiment;
Fig.6 is a block diagram showing a configuration of a shooting system according to a second embodiment of the present invention;
Figs.7A and 7B are block diagrams showing a configuration of a shooting system according to a third embodiment of the present invention;
Fig.8 is an illustrative drawing showing a configuration of a shooting system according to a fourth embodiment of the present invention;
Fig.9 is an illustrative drawing showing a configuration of a shooting system according to a fifth embodiment of the present invention; and
Fig.10 is an illustrative drawing showing a configuration of a shooting system according to a sixth embodiment of the present invention.

### DESCRIPTION OF THE PREFERRED EMBODIMENTS

In the following, embodiments of the present invention will be described with reference to the accompanying drawings.

In all the drawings for illustrating the embodiments of the invention, the same elements having the same functions are referred to by the same numerals, and a duplicate description thereof will be omitted.

### [FIRST EMBODIMENT]

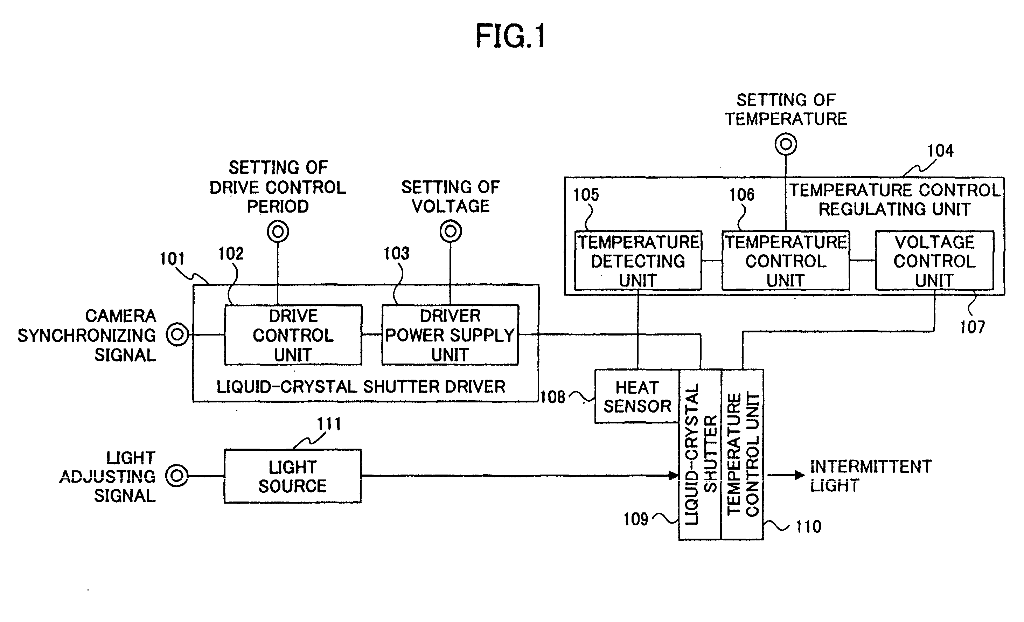

Fig.1 is a block diagram showing a configuration of a shooting system according to a first embodiment of the invention. In Fig.1, a television camera used for shooting is a TV camera provided with a conventional shutter mechanism, and a detailed description thereof will be omitted.

An illuminating apparatus of the shooting system according to the first embodiment controls illumination by a light source based on camera synchronizing signals, which are supplied from the television camera or external standard synchronizing signals. If two or more television cameras are used, all the television cameras operate in association with external standard synchronizing signals (such an operation is generally referred to as an external operation).

In the following, a description will be given of a case in which the television camera(s) (not shown) and the illuminating apparatus of the shooting system of the first embodiment operate in synchronization with external standard synchronizing signals (or in synchronization with a vertical synchronizing signal generated from the standard synchronizing signals). Further, a description of the first embodiment will be given with reference to a case in which a light source 111 emits illumination light. As will be described later, however, a liquid-crystal projector capable of projecting letters and images may be used as the light source 111, which makes it possible to apply the first embodiment to the presentation of letters and images. Further, the invention may be directly applied within the liquid-crystal projector, thereby making a liquid-crystal projector of the invention.

Fig.1 shows a liquid-crystal shutter driver 101, a drive control unit 102, a driver power supply unit 103, a temperature control regulating unit 104, a temperature detecting unit 105, a temperature control unit 106, a voltage control unit 107, a heat sensor 108, a liquid-crystal shutter 109, a temperature control unit 110, and the light source 111.

The shooting system of the first embodiment shown in Fig.1 includes a television camera with a conventional shutter mechanism (not shown), the light source 111 with its light intensity being controlled by a light adjusting signal, the liquid-crystal shutter 109 for controlling the transmitting and blocking of irradiating light emitted by the light source 111, the temperature control unit 110 for heating or cooling the liquid-crystal shutter 109 so as to keep the temperature within a predetermined range, the heat sensor 108 for sensing the temperature of the liquid-crystal shutter 109, the temperature control regulating unit 104 for regulating the temperature control unit 110 based on the temperature signal from the heat sensor 108 so as to keep the liquid-crystal shutter 109 operating at high speed in stable conditions, and the liquid-crystal shutter driver 101 that controls the liquid-crystal shutter 109 according to the camera synchronizing signals.

The liquid-crystal shutter driver 101 includes the drive control unit 102 and the driver power supply unit 103. The drive control unit 102 generates control signals indicating the light transmitting period and light blocking period of the liquid-crystal shutter 109 in accordance with the camera synchronizing signals and the drive control period (illumination timing & illumination period). The drive control period is set according to the non-exposure period of the television camera, as will be described later. The driver power supply unit 103 converts these control signals into drive signals that conform to the voltage setting.

The temperature control regulating unit 104 includes the temperature detecting unit 105, the temperature control unit 106, and the voltage control unit 107. The voltage control unit 107 supplies a drive power to the temperature control unit 110. The temperature detecting unit 105 detects the temperature of the liquid-crystal shutter 109 based on a power sensed by the heat sensor 108. The temperature control unit 106 compares the temperature detected by the temperature detecting unit 105 with a temperature (e.g., 100 degrees Celsius) set by a temperature setting unit (not shown), and controls the voltage control unit 107 to heat or cool the liquid-crystal shutter 109 by use of the temperature control unit 110.

The temperature control unit 110 may include only one of the heating means and the cooling means, depending on the intensity of light emitted by the light source 111. Such selection of the temperature control unit 110 based on the type of the light source 111 helps to simplify the construction of the liquid-crystal shutter 109. This makes it possible to reduce the size and weight of the liquid-crystal shutter 109 and the entire apparatus. Such an apparatus thus can be incorporated into a conventional system.

In the shooting system of Fig.1 as described above, the liquid-crystal shutter driver 101 operates in synchronization with external standard synchronizing signals, and so does the television camera. In the first embodiment, one cycle of the standard synchronizing signals, i.e., one field period (in interlacing), is used as a standard period, and the liquid-crystal shutter 109 is controlled within each field period so as to control intermittent light illumination, which is generated by the transmitting and blocking of irradiating light of the light source 111. As will be described later, the transmitting and blocking of light by the liquid-crystal shutter 109 are controlled by the shutter timing of the television camera (not shown), i.e., controlled by the timing of video capturing.

In the shooting system of the first embodiment, there is a signal source that generates the external standard synchronizing signals, which are supplied as shutter timing signals to the television camera(s) and the liquid-crystal shutter driver 101.

In this manner, the invention makes use of the combination of the light source 111 and the liquid-crystal shutter 109 so as to make the light of the light source 111 (or projector) intermittent. The liquid-crystal shutter 109 needs to be situated between the light source 111 and people who are supposed to see the light. In order to avoid having the light source 111 unnecessarily illuminating objects, the liquid-crystal shutter 109 may be positioned close to the light source 111, or a casing may be provided to cover the space between the light source 111 and the liquid-crystal shutter 109. Such prevention of leaking of irradiating light improves effectiveness of the invention. Since there are some cases in which leaking light is tolerable, the casing for the covering purpose is not an essential element of the invention.

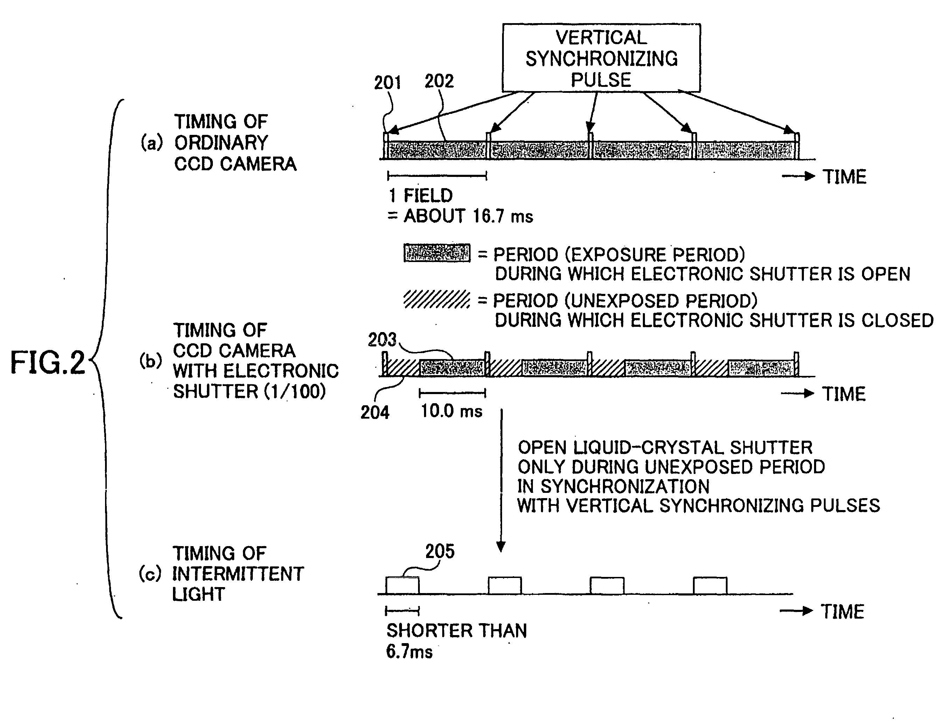

Fig.2 is a timing chart for explaining the generation of intermittent light according to the first embodiment. In what follows, the shooting operation of the first embodiment will be described with reference to Fig.2.

In Fig.2, letter designation (a) illustrates an exposure timing of a conventional CCD camera, and letter designation (b) shows an exposure timing of a CCD camera when an electronic shutter is used. Further, letter designation (c) illustrates an irradiation timing of the intermittent light according to the first embodiment. Fig.2 shows a NTSC method that is currently used in Japan. In the NTSC method, one frame is divided into two fields, and there are 60 fields in one second. It should be noted, however, that the invention is applicable to other methods by setting an exposure period 203 and an illumination timing 205 in accordance with the principle shown in Fig.2. The television camera will be described as a CCD camera that has a conventional CCD (charge coupled device) as an imaging device, but may be a television camera of another type that has a shutter mechanism.

In the conventional CCD camera, as shown in Fig.2(a), vertical synchronizing pulses 201 are generated at 1/60-sec intervals (i.e., about 16.7-msec intervals). A time period remaining after removing a vertical blanking period from the 16.7-msec interval is an exposure period 202.

In the shooting system of the first embodiment, on the other hand, a shooting period of the CCD camera may be set to 10.0 msec by use of the shutter mechanism. In this case, as shown in Fig.2(b), the CCD camera shoots a scene in the 10.0-msec period (i.e., the exposure period 203) that starts 6.7 msec after the vertical synchronizing pulse 201 corresponding to the end of one field. The 6.7-msec period starting from the vertical synchronizing pulse 201 is an unexposed period 204. Here, the shooting period of the CCD camera is not limited to 10.0 msec, but can be set to a different period.

The drive control unit 102 for driving the liquid-crystal shutter driver 101 operates in synchronization with the standard synchronizing signals (or the vertical synchronizing pulses 201) to open the liquid-crystal shutter 109 during the entire duration of one field except for the exposure period 203 of the CCD camera. Irradiating light from the light source 111 thus passes through the liquid-crystal shutter 109. In this manner, the liquid-crystal shutter 109 is set to allow passage of light only during an irradiating period 205 that corresponds to the unexposed period 204 of the CCD camera.

In this manner, the shooting system of the first embodiment utilizes the shutter mechanism of the CCD camera to limit the shooting period within each field to the exposure period 203, and allows light of the light source 111 to pass through the liquid-crystal shutter 109 during the remaining unexposed period 204, thereby generating intermittent light. This makes it possible to generate irradiating light that is not captured by the CCD camera.

Irradiating light generated by the apparatus of the first embodiment may be used to form a marker, which can be freely moved during the shooting, and can be presented only when it is necessary. Details of such usage will be described in connection with other embodiments.

When the exposure period of the CCD camera is set to 1/100 sec (10.0 msec) as described above, the liquid-crystal shutter 109 is required to have a response period less than 6.7 msec.

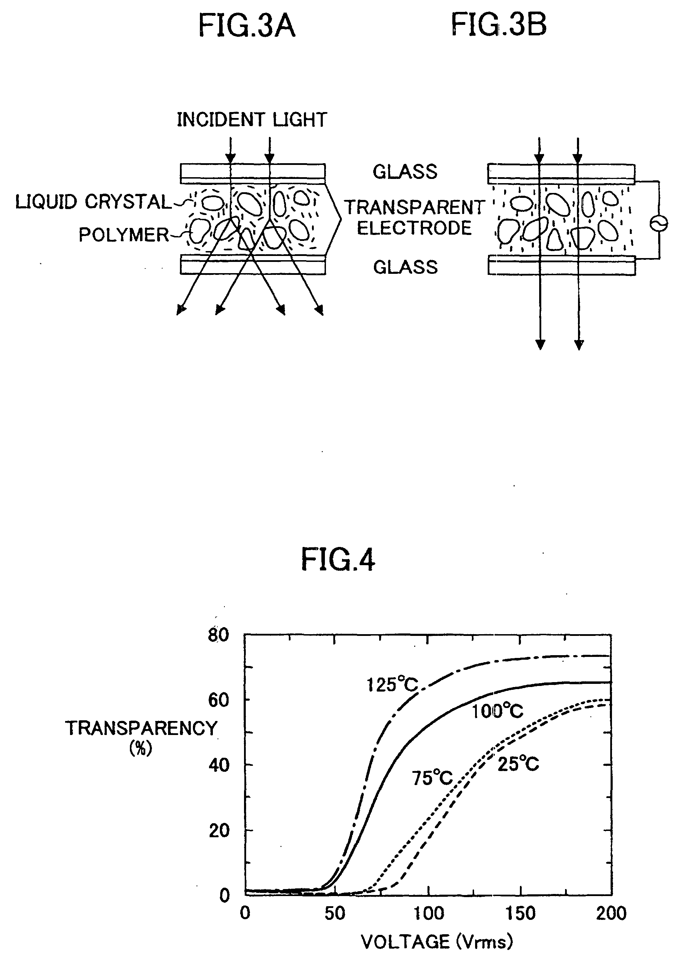

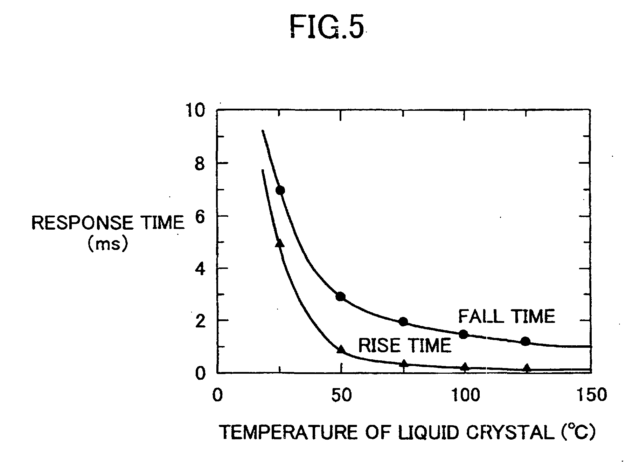

Figs.3A and 3B are illustrative drawings for explaining the directions of liquid-crystal molecules in the liquid-crystal shutter of the first embodiment. Fig.4 is a chart showing the relationship between transparency and the drive voltage that is applied to the liquid-crystal shutter of the first embodiment. Fig.5 is a chart showing the relationship between the temperature of liquid crystal and the response speed of the liquid-crystal shutter of the first embodiment. In the following, the liquid-crystal shutter 109 of the first embodiment will be described with reference to Figs.3A and 3B, Fig.4, and Fig.5.

Fig.3A shows the directions of liquid-crystal molecules when the liquid-crystal shutter is closed state (off state), and Fig.3B shows the directions of liquid-crystal molecules when the liquid-crystal shutter is open state (on state).

In the liquid-crystal shutter 109 of the first embodiment, liquid-crystal material that is used as the liquid-crystal layer may be Nematic liquid crystal, Cholesteric liquid crystal, or Smectic liquid crystal (including ferroelectric liquid crystal), which change their molecule orientations in response to an applied voltage.

Liquid crystal molecules can be aligned in a vertical direction, in a horizontal direction, or in a slanted direction relative to the substrate by an orientation film (polyimide or the like) provided on transparent electrodes, or can be placed in a spiral formation. With either one of these molecule orientations, incident light will change its polarization due to the birefringence responsive to the molecule orientation. With two polarizing plates sandwiching the liquid crystal, the applied voltage can be controlled to modulate incident light. In order to attain high-speed optical modulation, it is obviously advantageous to use a liquid crystal material having low viscosity or a ferroelectric liquid crystal with spontaneous polarization.

When a light source or projector that emits light with no polarization is used as the light source 111, use of a polarizing plate results in half the incident light being lost. In consideration of this, a composite film may be used that includes fine polymer structures (acrylic resin or the like) in liquid crystal. In this case, as shown in Fig.3A, a light scattering effect is present that is independent of polarization, thereby making polarizing plates unnecessary. When no voltage is applied to the transparent electrodes, the orientations of liquid crystal molecules are random, so that incident light with no polarization is scattered, resulting in the disappearance of light that travels straight ("off" state). When a sufficiently high voltage is applied to the transparent electrodes, as shown in Fig.3B, the liquid crystal molecules are aligned in the direction of the electric field, resulting in the disappearance of light scattering. Incident light thus passes through ("on" state).

A switching operation from the "off" state to the "on" state (i.e., rise response) or from the "on" state to the "off" state (i.e., fall response) is controlled by the Coulomb force that is applied by the electric field to the liquid crystal molecules and also by the orientation regulating force that is exerted by the resin structures on the liquid crystal molecules. As a result, the rise time improves as the voltage applied to the liquid-crystal shutter 109 is increased. As for the fall response, a high-speed response can be achieved by forming fine resin structures that are fabricated in the order of sub-microns.

An effective method of forming the composite film that is comprised of liquid crystal and polymer includes a phase separation method utilizing photo polymerization, thermal polymerization, or solvent evaporation, an impregnation method having a porous resin absorbing liquid crystal, etc.

As shown in Fig.5, the liquid-crystal shutter 109 will have an increased response speed as the temperature of liquid crystal is increased. In the first embodiment, the temperature control unit 110 heats the liquid-crystal shutter 109 when the liquid crystal is at low temperature, thereby reducing the viscosity of liquid crystal material so as to increase the speed of optical modulation. As a means to heat the liquid-crystal shutter 109, the temperature control unit 110 may be provided with a heater attached to the perimeter of the liquid-crystal shutter 109. Alternatively, the temperature control unit 110 may be provided with a transparent heater that supplies electric currents to transparent electrodes provided on a glass plate or the like that forms part of the liquid-crystal shutter 109. These transparent electrodes may be stacked one over another in the liquid-crystal shutter 109, thereby improving a heating effect.

As a means to cool the liquid-crystal shutter 109, the temperature control unit 110 may supply coolant water to a conduit that is installed in direct contact with the liquid-crystal shutter 109.

Such configurations as described above makes it possible to promptly stabilize the operation of the liquid-crystal shutter 109.

With the construction of the liquid-crystal shutter 109 as described above, it was possible to attain a rise time of less than 0.3 msec, a fall time of less than 1.7 msec, and a transparency of more than 70%, with the temperature of liquid crystal being 100 degrees Celsius, and the drive voltage being 145 Vp-p. As a heating mechanism of the temperature control unit 110, a heating plate was used that was comprised of transparent electrodes (Indium-Tin Oxide or the like) attached to a transparent substrate such as a glass plate. The heat sensor 108 was attached to the liquid-crystal shutter 109, and the temperature detecting unit 105 was used to detect the temperature of liquid crystal. The detected temperature was compared with a temperature of 100 degrees Celsius that was set by the temperature control unit 106. The voltage control unit 107 was then controlled as the need arose, so as to heat up the heating plate, thereby heating the liquid-crystal shutter 109 through heat conduction. In this manner the liquid-crystal shutter 109 was kept at the preset temperature of 100 degrees Celsius to make the liquid-crystal shutter 109 operate at high speed under stable conditions.

As described above, the shooting system of the first embodiment uses, as the liquid-crystal shutter 109, a liquid-crystal panel having a composite film that provides a light scattering effect independent of polarization, and also provides the heat sensor 108 and the temperature control unit 110 for the liquid-crystal shutter 109. Based on the sensing by the heat sensor 108, the temperature control regulating unit 104 controls the temperature control unit 110 to heat the liquid-crystal shutter 109 when the liquid crystal is at a low temperature. This reduces the viscosity of the liquid crystal material so as to achieve high-speed optical modulation. In general, a liquid-crystal shutter is relatively slow, and, thus, is not applicable to high-speed operations. In the first embodiment, however, an illuminating apparatus and shooting system based on the use of the liquid-crystal shutter 109 is made possible. As a result, the illuminating apparatus is reduced in size and weight. Also, such a liquid crystal shutter can easily be incorporated into an existing illuminating apparatus.

Further, the shutter mechanism of the television camera is utilized so that a shooting period within one field period is limited to the exposure period 203. The liquid-crystal shutter driver 101 controls the liquid-crystal shutter 109 such that irradiating light of the light source 111 passes through the liquid-crystal shutter 109 during the unexposed period 204. This achieves the generation of irradiating light that is not captured by the television camera.

Accordingly, a message can be conveyed by use of the irradiating light of the illuminating apparatus according to the first embodiment, thereby making it possible to present a message that cannot be seen by the television camera during the shooting.

### [SECOND EMBODIMENT]

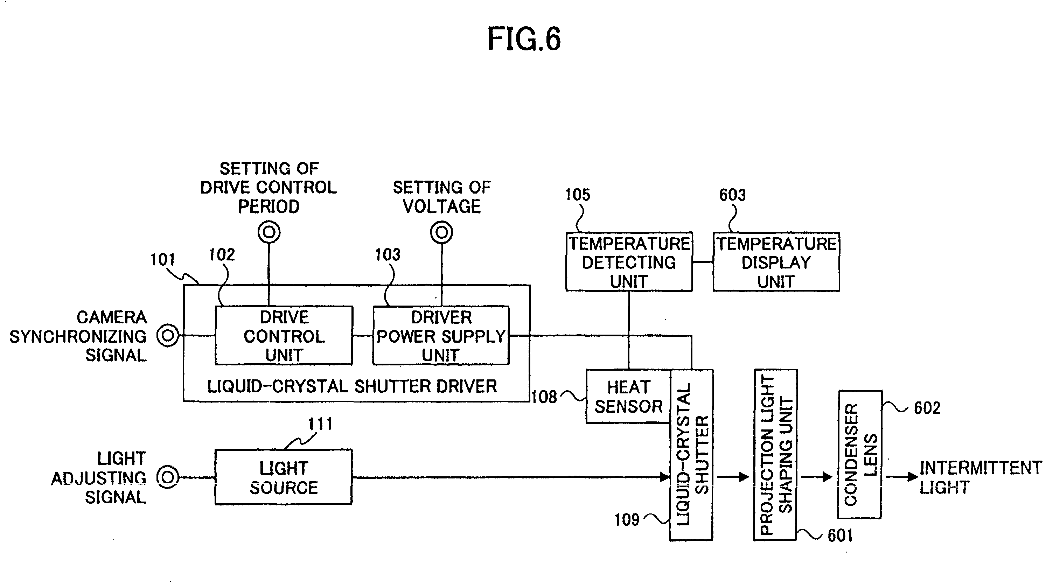

Fig.6 is a block diagram showing a configuration of a shooting system according to a second embodiment of the present invention. In the shooting system of Fig.6, elements are the same as those of the shooting system of the first embodiment, except for a projection light shaping unit 601, a condenser lens 602, and a temperature display unit 603. In the following, a description will be provided with respect to the projection light shaping unit 601, the condenser lens 602, and the temperature display unit 603.

As can be seen from Fig.6, the shooting system of the second embodiment heats the liquid-crystal shutter 109 by utilizing the heat of the light source 111. In order to achieve this, the illuminating apparatus of the shooting system of the second embodiment places the liquid-crystal shutter 109 between the light source 111 and the condenser lens 602. That is, provision is made such that the liquid-crystal shutter 109 is built into the illuminating apparatus. With this provision, heat generated by the light source 111 is efficiently conveyed to the liquid-crystal shutter 109, and, also, the illuminating apparatus is reduced in size.

Since a mechanism that monitors the performance of the liquid-crystal shutter 109 is necessary, the second embodiment includes the heat sensor 108, the temperature detecting unit 105, and the temperature display unit 603. The heat sensor 108 monitors the temperature of liquid crystal (i.e., the liquid-crystal shutter 109). The temperature detecting unit 105 detects the temperature of the liquid-crystal shutter 109 based on the power detected by the heat sensor 108. The temperature display unit 603 includes a liquid-crystal display panel or the like that displays the detected temperature.

The illuminating apparatus of the second embodiment is not provided with the temperature control unit 110. When the temperature of the liquid-crystal shutter 109 becomes too high, the distance between the light source 111 and the liquid-crystal shutter 109 may be increased, for example, in order to reduce the temperature of the liquid-crystal shutter 109. When the temperature of the liquid-crystal shutter 109 is low, the distance between the light source 111 and the liquid-crystal shutter 109 may be decreased, or a heating device may be used.

In the illuminating apparatus of the shooting system of the second embodiment, the projection light shaping unit 601 is situated between the liquid-crystal shutter 109 and the condenser lens 602. The projection light shaping unit 601 is a blocking mask plate such as an iron plate having a hole of a particular shape formed therein (e.g., a star shape). The projection light shaping unit 601 shapes irradiating light into a desired shape after the irradiating light passes through the liquid-crystal shutter 109.

In what follows, the operation of the shooting system of the second embodiment will be described with reference to Fig.6.

In the shooting system of the second embodiment, like the system of Fig.2, the liquid-crystal shutter driver 101 opens the liquid-crystal shutter 109 in synchronization with the vertical synchronizing pulses 201 during the unexposed period 204 that is a portion of one field excluding the exposure period 203 of the television camera. Irradiating light of the light source 111 thus passes through the liquid-crystal shutter 109. It is necessary to ensure that the shooting period of the television camera does not coincide with the illumination timing 205 of the intermittent light passing through the liquid-crystal shutter 109. To this end, the liquid-crystal shutter driver 101 opens the liquid-crystal shutter 109 during the 6.7-msec period immediately after each of the vertical synchronizing pulses 201. With the intermittent light is being shone at such an illumination timing 205, illuminating light that is captured by the television camera will be different from the irradiating light (intermittent light) of the light source 111 passing through the liquid-crystal shutter 109.

The liquid-crystal shutter 109 is heated by heat generated by the light source 111 and by light that is shone upon the liquid-crystal shutter 109. This reduces the viscosity of liquid crystal material of the liquid-crystal shutter 109, and increases the speed of optical modulation. That is, the illuminating apparatus and shooting system based on the use of the liquid-crystal shutter 109 is made possible despite the fact that liquid-crystal shutters are generally slow and not suitable to high-speed operations.

In this manner, the shooting system of the second embodiment utilizes the shutter mechanism of the television camera so as to limit the duration of a shooting period in one field, and lets irradiating light of the light source 111 pass through the liquid-crystal shutter 109 during the remaining period of the one field. This makes it possible to generate irradiating light that is not captured by the television camera.

Irradiating light generated by the illuminating apparatus of the second embodiment may be used to form a marker, which can be freely moved during the shooting, and can be presented only when it is necessary. Details of such usage will be later described in connection with other embodiments.

### [THIRD EMBODIMENT]

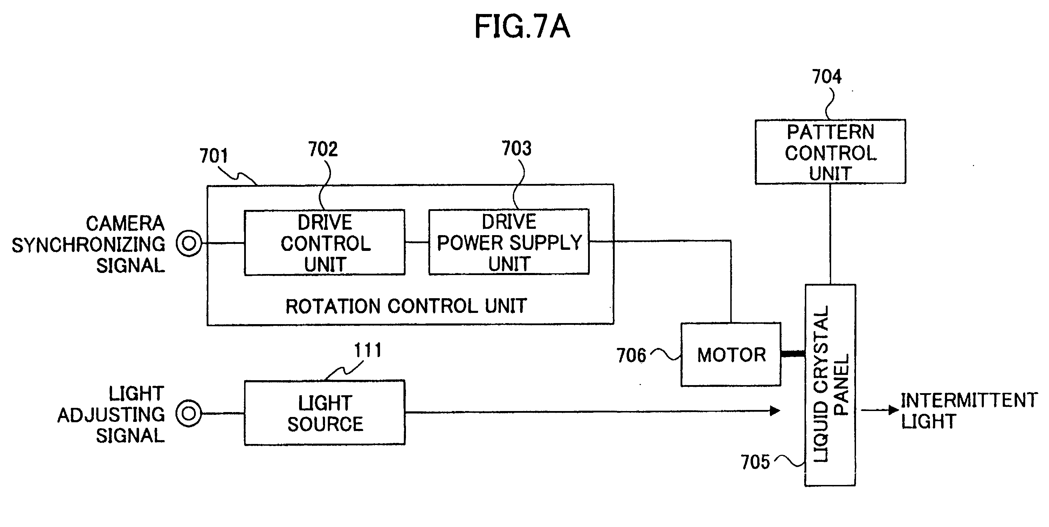

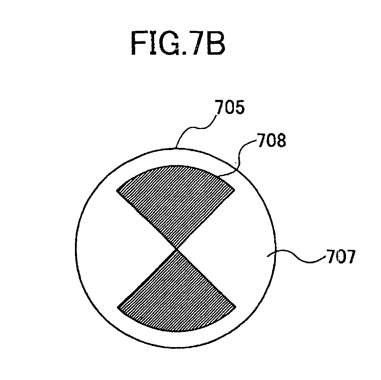

Figs.7A and 7B are block diagrams showing a configuration of a shooting system according to a third embodiment of the present invention. Fig.7A is provided for explaining the configuration of an illuminating apparatus of the shooing system according to the third embodiment. Fig.7B is provided for explaining the configuration of a liquid-crystal panel of the shooting system according to the third embodiment.

Fig.7 shows a rotation control unit 701, a drive control unit 702, a drive power supply unit 703, a pattern control unit 704, a liquid crystal panel 705, a motor 706, a blocking area 707, and a transmitting pattern 708. The transmitting pattern 708 is not limited to the two areas as shown in the figure, and can be formed in any number of areas.

As can be seen from Fig.7A, the shooting system of the third embodiment includes a television camera equipped with a conventional shutter mechanism, the light source 111 with the intensity of light being adjusted according to the light adjusting signal, the liquid crystal panel 705 for controlling the transmitting and blocking of irradiating light emitted by the light source 111, the motor 706 for rotating the liquid crystal panel 705, the pattern control unit 704 for controlling the shape of the transmitting pattern 708 that is formed in the liquid crystal panel 705, and the rotation control unit 701 that controls the rotation rate of the motor 706 in response to the camera synchronizing signal and the shape and number of areas of the transmitting pattern 708. Here, the rotation control unit 701 includes the drive control unit 702 and the drive power supply unit 703. The drive control unit 702 generates a rotation control signal synchronized with the vertical synchronizing pulses 201 by factoring into the illumination timing 205 determined based on the unexposed period of the television camera, the camera synchronizing signal, and the shape and number of areas of the transmitting pattern 708. The drive power supply unit 703 generates a rotation drive signal in response to the rotation control signal.

In this manner, the illuminating apparatus of the third embodiment uses the liquid crystal panel 705 having a circular shape in place of the liquid-crystal shutter 109. The liquid crystal panel 705 has the transmitting pattern 708 for transmitting the irradiating light of the light source 111 and the blocking area 707 for blocking the irradiating light, as shown in Fig.7B. The liquid crystal panel 705 is rotated in front of the light source 111, thereby alternately transmitting and blocking the irradiating light emitted by the light source 111. Here, the adjustment of the illumination timing 205 can be made by controlling the size and shape of the transmitting pattern 708, the distance between the adjacent areas of the transmitting pattern 708, the rotation rate of the liquid crystal panel 705, etc.

### [FOURTH EMBODIMENT]

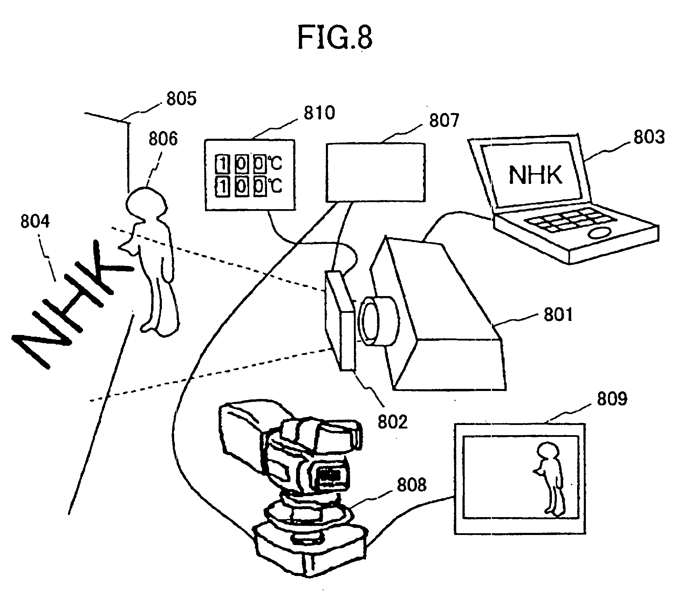

Fig.8 is an illustrative drawing showing a configuration of a shooting system according to a fourth embodiment of the present invention. The shooting system of the fourth embodiment serves to convey a message to the cast by use of the illuminating apparatus of the first embodiment. Needless to say, the illuminating apparatus of the third embodiment may alternatively be used. The shooting system of the fourth embodiment employs a projector 801 as an illuminating apparatus, thereby providing a message presenting function.

The shooting system of the fourth embodiment includes a synchronizing signal generating unit for generating a standard synchronizing signal, a projector 801 serving as the light source 111 and message presenting apparatus that project light so as to display letters and images, a liquid-crystal shutter mechanism 802 situated in front of the projector 801, a personal computer 803 serving as an information processing apparatus to control the presentation by the projector 801, a television camera 808 for taking a shot of a cast 806, a monitor 809 that displays the video image taken by the television camera 808, a control mechanism 807 for controlling the operation of the liquid-crystal shutter mechanism 802, and a temperature displaying unit 810 for displaying the temperature of the liquid-crystal shutter 109 constituting the liquid-crystal shutter mechanism 802. In the shooting system of the fourth embodiment, other conventional facilities for use in shooting television programs may of course be used, including lights for illuminating the studio, audio recording apparatus, etc. The liquid-crystal shutter mechanism 802 includes the heat sensor 108, the liquid-crystal shutter 109, and the temperature control unit 110, which were previously described. The control mechanism 807 includes the liquid-crystal shutter driver 101 and the temperature control regulating unit 104. The synchronizing signal generating unit may be included in the control mechanism 807, or may be provided somewhere else (such as in the proximity of the television camera 808 or as a unit attached to the television camera 808).

In the shooting system of the fourth embodiment, the projector 801 projects light on a wall 805, by which the cast 806 is standing. The liquid-crystal shutter mechanism 802 situated in front of the projector 801 is controlled by the control mechanism 807 so as to transmit or block (scatter) the light emitted by the projector 801.

The cast 806 performs by referring to the projection light 804 projected on the wall 805, thereby successfully appearing to be natural. The video images taken by the television camera 808 show the cast 806, but do not show the projection light 804 projected by the projector 801.

In the following, shooting by use of the shooting system of the fourth embodiment will be described.

In the shooting system of the fourth embodiment, the television camera 808 is provided with a shutter mechanism. As shown in Fig.2, the television camera 808 shoots a scene during the exposure period 203 that immediately follows the unexposed period 204, which starts at the beginning of each field, i.e., at the timing of the vertical synchronizing pulses 201 generated from the standard synchronizing signal.

As shown in Fig.2, the liquid-crystal shutter mechanism 802 is switched to a transparent state (i.e., the state that allows the passage of projection light from the projector 801) during the illumination timing 205 that is the remaining period excluding the exposure period 203 of the television camera 808 of each field period that is synchronized with the vertical synchronizing pulses 201. During this transparent state, thus, the projection light 804 is shone on the wall 805 by which the cast 806 is standing. The message is projected on the wall 805 intermittently in synchronization with each field period, and the cast 806 perceives the message as continuous light due to persistence of vision (i.e., residual images retained by vision). Images thus appear to be normal to visual perception.

The television camera 808 takes video images at the timing during which the projection light of the projector 801 is blocked by the liquid-crystal shutter mechanism 802, i.e., at the timing during which informational messages are not present. As a result, the projection light 804 does not appear in the picture taken by the television camera 808, as is illustrated in a screen of the monitor 809.

### [FIFTH EMBODIMENT]

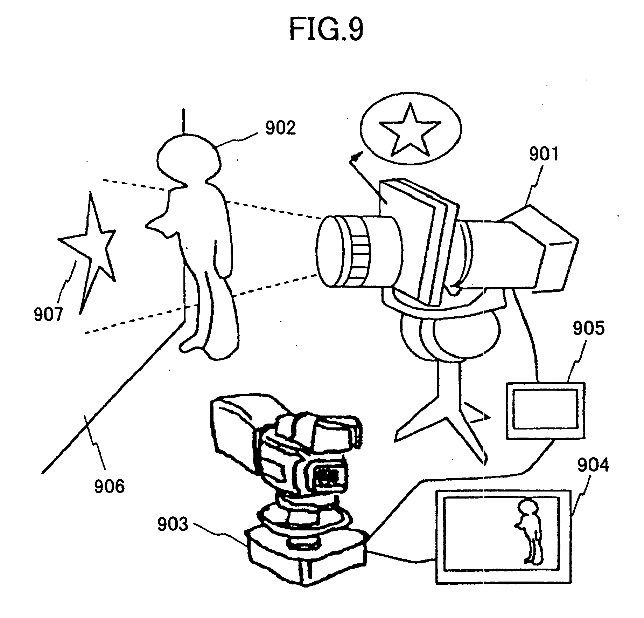

Fig.9 is an illustrative drawing showing a configuration of a shooting system according to a fifth embodiment of the present invention. The shooting system of the fifth embodiment utilizes the illumination apparatus of the second embodiment for the purpose of presenting messages to the cast. Alternatively, the illumination apparatus of the third embodiment may be used.

The shooting system of the fifth embodiment includes a synchronizing signal generating unit for generating a standard synchronizing signal, a spot illuminating apparatus 901 utilizing the illumination apparatus of the second embodiment, a television camera 903 for taking a shot of a cast 902, a monitor 904 that displays the video image taken by the television camera 903, and a control mechanism 905 for controlling the operation of the liquid-crystal shutter 109 provided inside the spot illuminating apparatus 901. It should be noted that the shooting system of the fifth embodiment is provided with other conventional facilities for use in shooting television programs, such as lights for illuminating the studio, audio recording apparatus, etc., as in the shooting system of the fourth embodiment. The projection light shaping unit 601 and the condenser lens 602 of the illumination apparatus of the second embodiment are built into the spot illuminating apparatus 901. The synchronizing signal generating unit may be included in the control mechanism 905, or may be provided somewhere else (such as in the proximity of the television camera 808 or as a unit attached to the television camera 808).

In the like manner as in the fourth embodiment, projection light 907 emitted by the spot illuminating apparatus 901 is shone on a wall 906 by which the cast 902 is standing. The cast 902 performs by referring to the projection light 907 projected on the wall 906, thereby successfully appearing to be natural. The video images taken by the television camera 903 show the cast 902, but do not show the projection light 907 projected by the spot illuminating apparatus 901, as is illustrated in a screen of the monitor 904.

A direction of the platform on which the spot illuminating apparatus 901 inclusive of the light source 111 and the condenser lens 602 is mounted may be adjusted to control the position and movement of the projection light 907.

### [SIXTH EMBODIMENT]

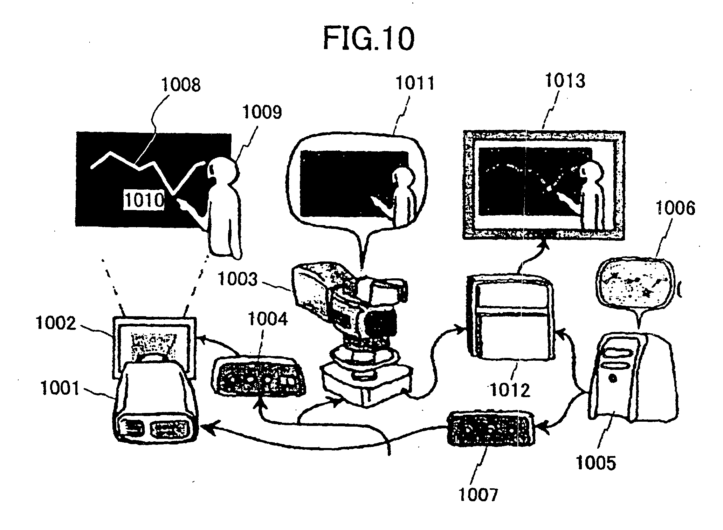

Fig.10 is an illustrative drawing showing a configuration of a shooting system according to a sixth embodiment of the present invention. The shooting system of the sixth embodiment uses the illumination apparatus of the first embodiment for presenting information to the cast in such a manner that the illumination apparatus is combined with a broadcasting computer graphics technology that is referred to as a virtual studio. Alternatively, the illumination apparatus of the third embodiment may be used. In the shooting system of the sixth embodiment, such an illumination apparatus is a liquid-crystal projector 1001, and thus serves as a displaying apparatus.

The shooting system of the sixth embodiment includes a synchronizing signal generating unit for generating a standard synchronizing signal, a projector 1001 serving as a displaying device for presenting letter information and/or image information, a liquid-crystal shutter mechanism 1002 situated in front of the projector 1001, a processing unit 1007 that processes video images by increasing the brightness of images, enhancing the contrast of images, simplifying images, etc., that are to be presented by the projector 1001, a television camera 1003 for taking a shot of a cast 1009, a control mechanism 1004 for controlling the operation of the liquid-crystal shutter mechanism 1002, a computer 1005 that generates real-time computer graphics images, and a video synthesizing apparatus 1012 that combines the video images taken by the television camera 1003 with the real-time CG video images generated by the computer 1005. Needless to say, the shooting system of the sixth embodiment is provided with other conventional facilities for use in shooting television programs, such as lights for illuminating the studio, audio recording apparatus, etc.

The liquid-crystal shutter mechanism 1002 includes the heat sensor 108, the liquid-crystal shutter 109, and the temperature control unit 110, which were previously described. The control mechanism 1004 includes the liquid-crystal shutter driver 101 and the temperature control regulating unit 104. The letter information and image information that are projected by the projector 1001 may include directions to the cast 1009 regarding actions and performances.

In the shooting system of the sixth embodiment, real-time CG video images 1006 generated by the computer 1005 are supplied to the processing unit 1007 and to the video synthesizing apparatus 1012. The real-time CG video images 1006 supplied to the processing unit 1007 are processed through brightness adjustment, contrast enhancement, simplification, etc., and the processed video images are then projected by the projector 1001. In the sixth embodiment, the liquid-crystal shutter mechanism 1002 is situated in front of the projector 1001, so that an image 1008 is projected on a wall, a screen, etc., only after passing through the liquid-crystal shutter mechanism 1002.

The liquid-crystal shutter mechanism 1002 is controlled by the standard synchronizing signal supplied from the synchronizing signal generation unit such that the liquid-crystal shutter mechanism 1002 is in the transparent state only during the illumination period 205 as shown in Fig.2. The projection image 1008 provided by the projector 1001 is thus shone on the wall or screen, by which the cast 1009 is standing, only during the illumination period 205 in which the liquid-crystal shutter mechanism is in the transparent state. The projection image 1008 is shown intermittently in synchronization with each field period, and the cast 1009 perceives the image as continuous light due to persistence of vision (i.e., residual images retained by vision). Images thus appear to be normal to visual perception. With this provision, the cast 1009 can accurately point to a point 1010 by referring to the projected video image when there is a need to point at the point 1010, which is the minimum point in the graph.

The television camera 1003 for shooting the cast 1009 operates based on the vertical synchronizing signal that is synchronized with the standard synchronizing signal, and takes video images at the exposure period 203 as shown in Fig.2. That is, the television camera 1003 takes a scene at the timing during which the projection image 1008 of the projector 1001 is blocked by the liquid-crystal shutter mechanism 1002. As a result, the projection image 1008 does not appear in the picture taken by the television camera 1003, as is illustrated in a video image 1011 output from the television camera 1003.

The video synthesizing apparatus 1012 outputs video images 1013 that are synthesized. To the viewers, thus, the performance of the cast 1009 appears natural as if the cast 1009 was acting with the CD image being actually presented in front of his/her eyes.

In the conventional system, the cast may have to point at the CG image by checking his/her own image synthesized with the CD image on a monitor screen provided in the studio, or may have to rely on a marker or the like that is placed on the wall. In the former case, the cast looks in the direction of the monitor, which appears unnatural. In the latter case, the cast cannot accurately point at the graph if the entirety of the graph is not presented or if the shape of the graph changes with time.

Further, the present invention is not limited to these embodiments, but various variations and modifications may be made without departing from the scope of the present invention.

The present application is based on Japanese priority application No. 2002-126976 filed on April 26, 2002, with the Japanese Patent Office.

## Claims

1. An apparatus for shining light on an object during periods excluding the intermittent exposure periods of a camera taking shots of said object,comprising:
a light source (111) which emits light; a liquid-crystal shotter driver (101) adapted to receive a synchronizing signal of a television standard; and
a liquid-crystal shutter (109) adapted to switch between transmitting of the light and blocking of the light in synchronization with the synchronizing signal such that the light is intermittently shone on the object.

2. The apparatus as claimed in claim 1, wherein said light source is a projector adapted to project an image on the object.

3. The apparatus as claimed in claim 1, wherein said light source is adapted to project a message on the object.

4. The apparatus as claimed in claim 1, wherein said shutter further includes a temperature control unit (110) adapted to control the temperature of the liquid-crystal shutter.

5. The apparatus as claimed in claim 4, wherein said shutter further includes a temperature detecting unit (108) adapted to detect the temperature of the liquid-crystal shutter, and said temperature control unit is adapted to adjust the temperature of the liquid-crystal shutter to a predetermined temperature based on the temperature measured by said temperature detecting unit.

6. The apparatus as claimed in claim 1, wherein said liquid-crystal shutter includes a composite film that includes liquid crystal and polymer structures.

7. A system for shooting an object, comprising: the apparatus of claim 1, and a camera (808) adapted to intermittently take a shot of the object during intermittent periods in synchronization with the synchronizing signal.

8. The system as claimed in claim 7, wherein said light source is a projector (801) adapted to project an image on the object.

9. The system as claimed in claim 8, further comprising: a video synthesizing unit (1012); and an image generating unit (1005) adapted to generate a video signal of said image, and to supply the video signal of said image to said projector and to said video synthesizing unit, wherein said video synthesizing unit is adapted to combine the shot of the object taken by said camera with said image of the video signal supplied from said image generating unit.

10. The system as claimed in claim 7, further including a synchronizing signal generating unit adapted to generate a synchronizing signal, based on which said camera is adapted to intermittently take a shot of the object, and said shutter is adapted to intermittently block the light in synchronization with the synchronizing signal.

11. The system as claimed in claim 10, wherein said shutter further includes a temperature control unit (110) adapted to control a temperature of the liquid-crystal shutter.

12. The system as claimed in claim 11, wherein said shutter further includes a temperature detecting unit (108) adapted to detect the temperature of the liquid-crystal shutter, and said temperature control unit is adapted to adjust the temperature of the liquid-crystal shutter to a predetermined temperature based on the temperature measured by said temperature detecting unit.

13. The ystem as claimed in claim 12, wherein said liquid-crystal shutter includes a composite film that includes liquid crystal and polymer structures.

## Patentansprüche

1. Vorrichtung zum Beleuchten eines Gegenstands während Zeiten außerhalb der intermittierenden Belichtungszeiten einer Aufnahmen des Gegenstands machenden Kamera mit:
einer Lichtquelle (111), die Licht aussendet,
einer Flüssigkristallverschluss-Ansteuerung (101), die ein fernsehübliches Synchronisationssignal empfängt, und
einem Flüssigkristallverschluss (109), der eingerichtet ist, synchronisiert mit dem Synchronisationssignal zwischen Durchlassen des Lichts und Blockieren des Lichts so umzuschalten, dass das Licht intermittierend auf den Gegenstand geworfen wird.

2. Vorrichtung nach Anspruch 1,
**wobei** die Lichtquelle ein Projektor ist, der eingerichtet ist, ein Bild auf den Gegenstand zu projizieren.

3. Vorrichtung nach Anspruch 1,
**wobei** die Lichtquelle eingerichtet ist, eine Mitteilung auf einen Gegenstand zu projizieren.

4. Vorrichtung nach Anspruch 1,
**wobei** der Verschluss weiter eine Temperatursteuereinheit (110) aufweist, die eingerichtet ist, die Temperatur des Flüssigkristallverschlusses zu steuern.

5. Vorrichtung nach Anspruch 4,
**wobei** der Verschluss weiter eine Temperaturerfassungseinheit (108) aufweist, die eingerichtet ist, die Temperatur des Flüssigkristallverschlusses zu erfassen, und die Temperatursteuereinheit eingerichtet ist, die Temperatur des Flüssigkristallverschlusses auf eine festgelegte Temperatur einzustellen, basierend auf der von der Temperaturerfassungseinheit gemessenen Temperatur.

6. Vorrichtung nach Anspruch 1,
**wobei** der Flüssigkristallverschluss eine Verbundschicht umfasst, die Flüssigkristall- und Polymerstrukturen umfasst.

7. Aufnahmesystem für einen Gegenstand mit:
der Vorrichtung nach Anspruch 1 und einer Kamera (808), die eingerichtet ist, um intermittierend eine Aufnahme des Gegenstands während intermittierender Zeiten, synchronisiert mit dem Synchronisierungssignal zu machen.

8. System nach Anspruch 7,
**wobei** die Lichtquelle ein Projektor (801) ist, der eingerichtet ist, ein Bild auf den Gegenstand zu projizieren.

9. System nach Anspruch 8, weiter mit:
einer Videosyntheseeinheit (1012) und
einer Bilderzeugungseinheit (1005), die eingerichtet ist, um ein Videosignal des Bildes zu erzeugen und das Videosignal des Bildes dem Projektor und der Videosyntheseeinheit zuzuführen,
wobei die Videosyntheseeinheit eingerichtet ist, die durch die Kamera gemachte Aufnahme des Gegenstands mit dem Bild des von der Bilderzeugungseinheit zugeführten Videosignals zu kombinieren.

10. System nach Anspruch 7,
weiter eine Synchronisationssignal-Erzeugungseinheit umfassend, die eingerichtet ist, um ein Synchronisationssignal zu erzeugen, auf dem basierend die Kamera eingerichtet ist, intermittierend eine Aufnahme des Gegenstands zu machen, und der Verschluss eingerichtet ist, um intermittierend das Licht synchronisiert mit dem Synchronisationssignal zu blockieren.

11. System nach Anspruch 10,
**wobei** derVerschluss weiter eine Temperatursteuereinheit (110) aufweist, die eingerichtet ist, die Temperatur des Flüssigkristallverschlusses zu steuern.

12. System nach Anspruch 11,
**wobei** der Verschluss weiter eine Temperaturerfassungseinheit (108) aufweist, die eingerichtet ist, die Temperatur des Flüssigkristallverschlusses zu erfassen, und die Temperatursteuereinheit eingerichtet ist, die Temperatur des Flüssigkristallverschlusses auf eine festgelegte Temperatur einzustellen, basierend auf der von der Temperaturerfassungseinheit gemessenen Temperatur.

13. System nach Anspruch 12,
**wobei** der Flüssigkristallverschluss eine Verbundschicht umfasst, die Flüssigkristall- und Polymerstrukturen umfasst.

## Revendications

1. Appareil pour éclairer un objet pendant des périodes excluant les périodes d'exposition discontinue d'une caméra effectuant des prises de vue sur ledit objet, comprenant :
une source de lumière (111) qui émet de la lumière ;
un pilote d'obturateur à cristaux liquides (101) adapté pour recevoir un signal de synchronisation d'une norme de télévision ; et
un obturateur à cristaux liquides (109) adapté pour commuter entre la transmission de la lumière et le blocage de la lumière en synchronisation avec le signal de synchronisation de sorte que la lumière soit dirigée par intermittence sur l'objet.

2. Appareil selon la revendication 1, dans lequel ladite source de lumière est un projecteur adapté pour projeter une image sur l'objet.

3. Appareil selon la revendication 1, dans lequel ladite source de lumière est adaptée pour projeter un message sur l'objet.

4. Appareil selon la revendication 1, dans lequel ledit obturateur comprend en outre une unité de contrôle de la température (110) adaptée pour contrôler la température de l'obturateur à cristaux liquides.

5. Appareil selon la revendication 4, dans lequel ledit obturateur comprend en outre une unité de détection de température (108) adaptée pour détecter la température de l'obturateur à cristaux liquides, et dans lequel ladite unité de contrôle de la température est adaptée pour ajuster la température de l'obturateur à cristaux liquides à une température prédéterminée en fonction de la température mesurée par ladite unité de détection de température.

6. Appareil selon la revendication 1, dans lequel ledit obturateur à cristaux liquides comprend un film composite qui contient des structures de cristaux liquides et de polymère.

7. Système pour filmer un objet, comprenant l'appareil de la revendication 1, et une caméra (808) adaptée pour effectuer une prise de vue de l'objet par intermittence pendant des périodes discontinues en synchronisation avec le signal de synchronisation.

8. Système selon la revendication 7, dans lequel ladite source de lumière est un projecteur (801) adapté pour projeter une image sur l'objet.

9. Système selon la revendication 8, comprenant en outre : une unité de synthèse vidéo (1012) ; une unité de génération d'image (1005) adaptée pour générer un signal vidéo de ladite image, et pour délivrer le signal vidéo de ladite image au dit projecteur et à ladite unité de synthèse vidéo, dans lequel ladite unité de synthèse vidéo est adaptée pour combiner la prise de vue de l'objet effectuée par ladite caméra avec ladite image du signal vidéo délivré à partir de ladite unité de génération d'image.

10. Système selon la revendication 7, comprenant en outre une unité de génération de signal de synchronisation adaptée pour générer un signal de synchronisation, en fonction de quoi ladite caméra est adaptée pour effectuer par intermittence une prise de vue de l'objet, et ledit obturateur est adapté pour bloquer par intermittence la lumière en synchronisation avec le signal de synchronisation.

11. Système selon la revendication 10, dans lequel ledit obturateur comprend en outre une unité de contrôle de la température (110) adaptée pour contrôler une température de l'obturateur à cristaux liquides.

12. Système selon la revendication 11, dans lequel ledit obturateur comprend en outre une unité de détection de température (108) adaptée pour détecter la température de l'obturateur à cristaux liquides, et dans lequel ladite unité de contrôle de la température est adaptée pour ajuster la température de l'obturateur à cristaux liquides à une température prédéterminée en fonction de la température mesurée par ladite unité de détection de température.

13. Système selon la revendication 12, dans lequel ledit obturateur à cristaux liquides comprend un film composite qui contient des structures de cristaux liquides et de polymère.
